Europäisches Patentamt

European Patent Office

Office européen des brevets

(11) Publication number: **0 213 508**
**A2**

## (12) EUROPEAN PATENT APPLICATION

(21) Application number: 86111295.1

(22) Date of filing: 14.08.86

(51) Int. Cl.⁴: **C02F 1/52**

(30) Priority: 19.08.85 US 767166

(43) Date of publication of application:
11.03.87 Bulletin 87/11

(84) Designated Contracting States:
AT BE CH DE FR GB IT LI NL SE

(71) Applicant: PETERSON FILTERS
CORPORATION
1949 South 300 West
South Lake City Utah(US)

(72) Inventor: Peterson, Lynn C.
2578 South Elizabeth Street
Salt Lake City Utah(US)
Inventor: Clitheroe, Jay B.
3510 Westwood Drive
Salt Lake City Utah(US)

(74) Representative: Baillie, Iain Cameron et al
c/o Ladas & Parry Isartorplatz 5
D-8000 München 2(DE)

(54) Method and apparatus for use in separating solids from liquids.

(57) A system for subjecting a slurry containing solids and a liquid and a flocculating agent in a processing chamber to forces to move the slurry, liquid and flocculating agent through the processing chamber from an inlet opening to an outlet opening in turbulent flow along a continuous spiral and circulatory path so as to form the solids into floccules which may be readily separated from the liquid in which they are contained.

FIG. 1

## METHOD AND APPARATUS FOR USE IN SEPARATING SOLIDS FROM LIQUIDS

Field of the Invention

This invention is directed to method and apparatus for separating solids from liquids including the use of flocculating agents, such as polymers, and more particularly for separating fine solids having particle sizes of about 28 mesh by zero from liquids such as the refuse in a coal preparation plant.

Background of the Invention

Various methods and apparatus for separating fine particle size solids from liquids are in use today. One such method and apparatus is disclosed in U. S. Patent No. 3,523,889 to F. G. Eis. In this patent a flocculating agent is introduced into a slurry which is then discharged from a standpipe and its flow is arrested by a baffle and deflected outwardly for mixing with the liquid in the tank. In Eis, the slurry with the flocculating agent included therein is introduced into the tank in the midst of gentle agitation. Another method is disclosed in U. S. Patent No. 4,055,494 to R. C. Emmett, Jr. and assigned to Envirotech Corporation. In the Emmett patent, the slurry to be separated is fed successively through for mixing stages and a portion of the flocculating agent is introduced and mixed in each stage using a rotating blade. The Emmett patent does not state the type of agitation in the mixing stages. However, testimony in a trial Amstar Corporation vs. Envirotech Corporation and Energy Fuels Nuclear, Inc., in the United States District Court For The District of Utah Central Division in a division published May 3, 1983 shows that Envirotech sought to test a means of mechanically stirring flocculant and slurry with sufficient force to produce excellent floc formation but not so forceful as to destroy flocs once formed. J. Rosenbaum & J. Clemmer, "Liquid-Solids Separations," in J. Clegg & D. Foley, Uranium Ore Processing 172, 1980 (1958), ("the flocculant must be disseminated uniformly throughout the slurry without degrading the floccules. Intense agitation to distribute the reagent for maximum effectiveness degrades the fragile floccules, and thus defeats its own purpose.") The process in each of Eis and Emmett forms generally butterfly-like floccules which tend to result in cake which is relatively wet and sticky when separated out of the slurry.

Summary of the Invention

This invention relates to method and apparatus for separating solids in fine particle sizes from a liquid using a flocculating agent, such as an activated polymer mixture, in a zone of intense agitation. In accordance with this invention, the floccules are not fragile but are very strong and when th solids comprise a 28 mesh by zero refuse produced in a coal processing plant are relatively small and generally bead-like in shape and which, when they are separated from the slurry, result in a cake that is relatively dry and firm. In an embodiment of the invention, as illustrated specifically in this application, this is accomplished in a separate unit of a coal preparation plant process. It is understood that a coal preparation plant is used for purposes of description only and that the invention is applicable for the separation of any kind of solids from a slurry while using a flocculating agent.

In one embodiment of the invention, a vessel having at least one processing chamber is provided. The processing chamber has a peripheral outer wall portion extending for 360 degrees about a central vertical axis and has an inlet opening in a lower portion thereof and an outlet portion in an upper portion thereof. When the process is in operation, a substantially constant volume of solids, flocculating agent and liquid is maintained in the processing chamber. A first slurry comprising solids in a liquid is introduced into the processing chamber through the inlet opening. A flocculating agent, such as a dilute mixture of an activated polymer, is introduced into the first slurry while in the processing chamber. Means are provided to create forces in the processing chamber to cause movement of the slurry and the flocculating agent in a substantially continuous path from the inlet opening to the outlet opening. The substantially continuous path comprises a plurality of adjacent generally vertical spiral portions extending in a circulatory direction through an arc less than 360 degrees. The amount of the created forces necessary to cause the movement through the substantially continuous path also causes turbulent flow of the combined first slurry and flocculating agent during movement over the substantially continuous path. During the movement through the substantially continuous path, the flocculating agent acts on the solids in the first slurry to change the solids into floccules. While the size and shape of the floccules may vary, the process when used in a coal processing plant produced floccules that appeared to be relatively small and bead-like in configuration.

It is an object of this invention to separate fine sized solids from a liquid in a slurry by using a flocculating agent wherein the slurry and the flocculating agent are subjected to turbulent flow to form floccules.

It is another object of this invention to form fine solids in a slurry into floccules so that, when the floccules are separated from the slurry in a filtering operation, the resulting cake is firm and relatively dry so that it may be readily removed from the filtering means.

It is a further object of this invention to form fine solids in a slurry into floccules so that, when the floccules are separated from the slurry in a filtering operation, the resulting cake is relatively dry so that it may be readily removed from the filtering means using an additional unit in a conventional coal processing plant.

Additional objects, advantages, and novel features of the invention are set forth in part in the description which follows which will be understood by those skilled in the art upon examination of the following or may be learned by practice of the invention. The objects and advantages of the invention may be realized and obtained by means of the instrumentalities and combinations particularly pointed out in the appended claims.

Brief Description of the Invention

Fig. 1 is a schematic illustration of a flow diagram of a coal processing plant incorporating the invention;

Fig. 2 is a schematic side elevational view of one embodiment of the invention;

Fig. 3 is a top plan view of a portion of Fig. 2;

Fig. 4 is a graph illustrating the various degrees of agitation;

Fig. 5 is a schematic side elevational view of another embodiment of the invention;

Fig. 6 is a top plan view of a portion of Fig. 5;

Fig. 7 is a schematic side elevational view of another embodiment of the invention;

Fig. 8 is a top plan view of a portion of Fig. 7;

Fig. 9 is a schematic side elevational view of another embodiment of the invention;

Fig. 10 is a top plan view of a portion of Fig. 9;

Fig. 11 is an enlarged view with parts in section of a means for distributing a flocculating agent;

Fig. 12 is a schematic side elevational view of the components of this invention mounted on a common base; and

Fig. 13 is a top plan view of Fig. 12.

Detailed Description of the Invention

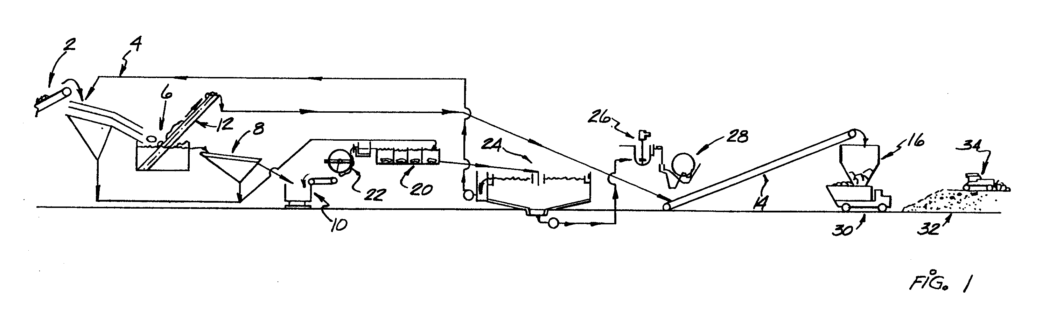

In Fig. 1, there is schematically illustrated a flow diagram of a coal processing plant comprising a conveyor 2 carrying run of the mine material and dumping the material into a unit 4 wherein the material is separated into a greater than 28 mesh size and a 28 mesh by zero size. The greater than 28 mesh material is fed into the jig 6 wherein water is used to separate the low ash coal from refuse, such as rock, slate and high ash disposable material. The separation is by specific gravity with the coal floating across the surface of the jig 6 and the refuse sinking to the bottom. The low ash coal is separated and fed into dewatering screens 8 and then into a rail car 10. The refuse is taken out of the jig 6 by conveyor 12 and transported to conveyor 14 and dumped into refuse truck bin 16.

The 28 mesh by zero size run of the mine material in a water slurry is drained from the unit 4 and fed into float cells 20 wherein the 28 mesh by zero size low ash coal is separated out and fed into a filter unit 22. Water and any fine size material contained therein is drained from the dewatering screen 8 and is also fed into the float cells 20. The dewatered 28 mesh by zero low ash coal is transferred from the filter unit 22 to the rail car 10. The 28 mesh by zero refuse sinks to the bottom of the float cells 20 and is transferred in slurry form to a thickener/clarifier 24. The thickened 28 mesh by zero refuse in slurry form is fed into a flocculator 26 wherein a flocculating agent is introduced into the slurry which is then subjected to turbulent flow so as to form the 28 mesh by zero refuse into floccules in a slurry and then fed into the refuse filter 28. The filter cake comprising the flocculated 28 mesh by zero refuse is removed from the filter and deposited onto the greater than size 28 mesh refuse on the conveyor belt 14 to be dumped into refuse truck bin 16. The refuse is dumped from refuse truck bin 16 into trucks 30 and transported to gob pile 32 wherein cats 34 push and level out the refuse in the gob pile. The height in the gob pile is initially 12 inches and is then compacted to 4:1 to seal the gob pile from air to prevent spontaneous gob pile fires.

In one operation, the filter unit 28 was filtering the refuse at a rate of about 7 tons per hour prior to the installation of a flocculator 26 of this invention. After installation of the flocculator 26, the filter unit was filtering the refuse at a rate of about 15 - 20 tons per hour. This is significant since if the filter unit 28 in some cases cannot keep the solids pulled down in the thickener, the refuse filter 28 must be run after the shifts. This means that there is no coarse refuse on the conveyor 14 so that the 28 mesh by zero refuse cannot be intermixed with the coarse refuse and must go to the gob pile 32 alone which is not desirable. Also, in accordance with this invention, the filter cake on filtering means is relatively firm and dry so that it is readily removed from the filtering means and is in a move preferred condition for deposition onto the gob pile.

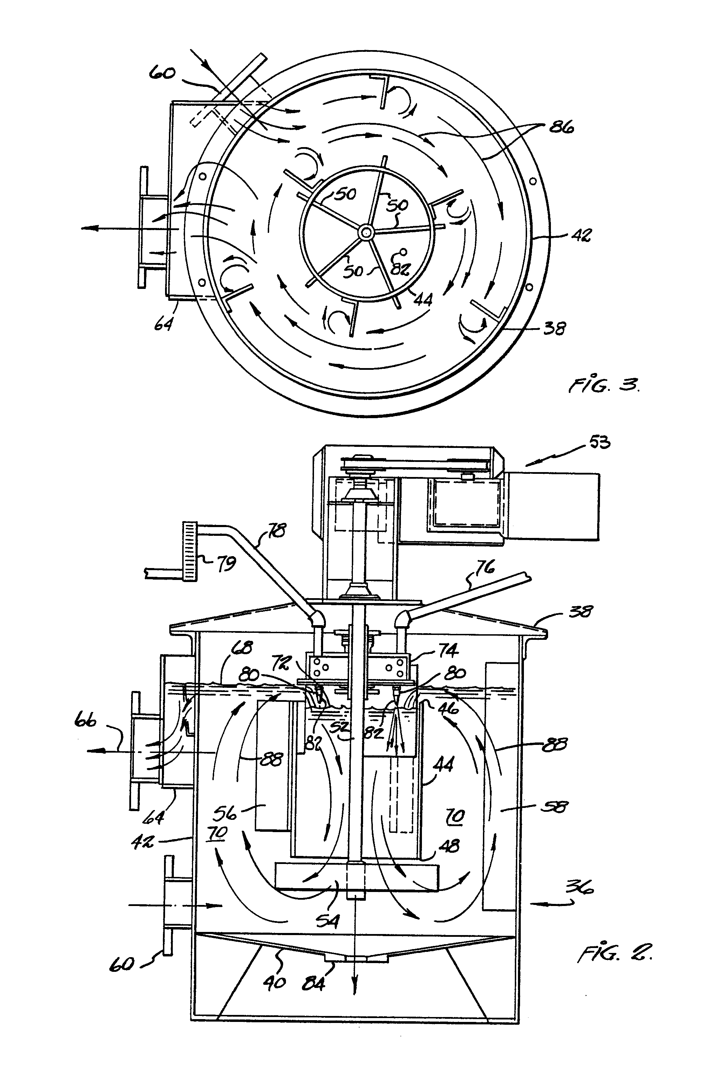

One embodiment of this invention is illustrated in Figs. 2 and 3 and comprises a vessel 36 having processing chamber 38 comprising having a bottom 40 and a side wall 42. A cylinder 44 having an open top end 46 and an open bottom end 48 is positioned in the processing chamber 38 so that the open bottom end 48 is spaced from the bottom 40 of the processing chamber 38. A bladed means 50, such as an impeller having vertical or slanted vanes or a propeller having shaped blades or other similar structure is located adjacent to and below the open bottom end 48. The bladed means 50 is connected to a shaft 52 which can be rotated by suitable means 53. The blades 54 of the bladed means 50 are designed so as to move the material in the areas adjacent to the impeller 50 in a downward and circular direction. The rotation of the bladed means also induces the flow of the material within the cylinder 44 in such a manner that the level of the material within the cylinder 44 is below the level of the other material in the processing chamber 38. The diameter of the tip of the blades 54 is slightly greater than the inside diameter of the cylinder 48. The outer surface of the cylinder 48 is provided with a plurality of baffles 56 and the inner surface of the side wall 42 is provided with baffles 58 to dampen the circular flow of materials in the processing chamber 38 and cause a spiral circulating flow pattern as discussed below.

An inlet 60 is located in a lower portion of the side wall 42 of the processing chamber 38. A slurry 62 containing the solids to be separated from the liquid is introduced into the processing chamber 38 through the inlet 60. An outlet 64 is located in an upper portion of the side wall 42 of the processing chamber 38. A slurry 66 comprising the flocced bead-like floccules in a liquid is extracted from the processing chamber 38 through the outlet 64. The rate of slurry 62 introduction and flocculating agent introduction relative to the rate of slurry 66 extraction function to maintain the level 68 of the material in the processing chamber 38. Because of the differences in characteristics of the slurry 62 as compared to the characteristics of the slurry 66, the volume 70 of material in the processing chamber 38 comprises many different types of slurries. It is noted that the level 72 of the volume 70 of slurries within the cylinder 44 is slightly below the level 68. As stated above, this is caused by the inducement of flow through the cylinder 44 by the rotation of the bladed means 50.

A blender 74 is located in the processing chamber 38 and spaced above the levels 68 and 72 in the processing chamber 38. A pipe 76 is used to feed a flocculating agent, such as an activated polymer mixture, having a concentration of about 0.5 per cent by weight into the blender 74. A pipe 78 is used to feed dilution water into the blender 74. A flow meter 79 is used to control the amount of dilution water added. Suitable means - (not shown) are provided within the blender 74 so as to form a suitable intermixing of the flocculating agent and the dilution water so that the flocculating agent used in the process has a concentration of less than 0.05 per cent by weight. A plurality of tubes 80 extend from the blender 74 downwardly inside of the cylinder 44. The tubes 80 are provided with nozzles 82 adjacent to and above the impeller 50. Although the nozzles 82 are preferably located as shown, it is within the scope of this invention to have the nozzles 82 located at any height within the cylinder 44. The inlet 60 is located in relation to the outlet 64 so that the circulatory portion of the flow path of the material moving through the vessel is less than 360 degrees. In a preferred embodiment of the invention, this circulatory portion of the flow path is about 315 degrees. A drain 84 is lcoated in the bottom 40 for use when needed.

In accordance with this invention, the material being processed in the vessel flows in a continuous spiral and circulatory path while being subjected to turbulent flow. When the process is in operation, a substantially constant volume of solids, flocculating agent and liquid is maintained in the vessel. A first slurry comprising solids in a liquid is introduced into the vessel through an inlet opening located in a lower portion of the vessel. A flocculating agent, such as a dilute mixture of an activated polymer, is introduced into the first slurry while in the vessel. Means are provided to create forces in the vessel to cause movement of the slurry and flocculating agent in a substantially continuous path from the inlet opening to an outlet opening located in an upper portion of the vessel. The substantially continuous path comprises a plurality of adjacent generally vertical spiral portions extending in a circulatory direction through an arc less than 360 degrees. The amount of the created forces necessary to cause the movement through the substantially continuous path also causes turbulent flow of the combined first slurry and flocculating agent during movement over the substantially continuous path. During the movement through the substantially continuous path, the flocculating agent acts on the solids in the first slurry to change the solids into floccules. While the size and shape of the floccules may vary, the process when used in a coal processing plant produced floccules that appeared to be relatively small and bead-like in configuration.

In the embodiment of the invention illustrated in Figs. 2 and 3, this substantially continuous flow path is produced by the combination of rotating the bladed means 50 so that the blades have a tip speed between about 300 and 600 feet per minute with the baffles 56 and 58 cooperating to form the combined spiral and circulatory path. In order to produce the proper intensity of agitation, the bladed means 50 should have a diameter which is between 30 and 60 per cent of the inner diameter of the processing chamber 38. In the embodiment illustrated in Figs. 2 and 3, the turbulent flow and flow path is obtained by rotating a bladed means 50 having 5 blades and a diameter of about 15 inches at a rate sufficient to produce a tip speed of each blade of about 500 feet per minute in a vessel having an inner diameter of about 30 inches. The cylinder 44 has an inner diameter of about 13 inches. The flocculating agent has a concentration of about 0.025 per cent by weight. The height of the material in the processing chamber 38 should be 60 to 85 per cent of the diameter of the processing chamber 38. The slurry introduced into the processing chamber 38 should make at least three complete spiral paths while passing through a circulatory path of about 315 degrees between the inlet 60 and the outlet 64. The spiral path includes downwardly moving portions within the cylinder 44 and vertically moving portions between the cylinder 44 and the outer wall of the processing chamber. The flocculating agent acts on the solids in the first slurry during movement through the substantially continuous path to change the solids into floccules. A slurry comprising the floccules in a liquid moves out of the vessel through the outlet opening and then into a filter unit wherein the floccules are separated from the liquid.

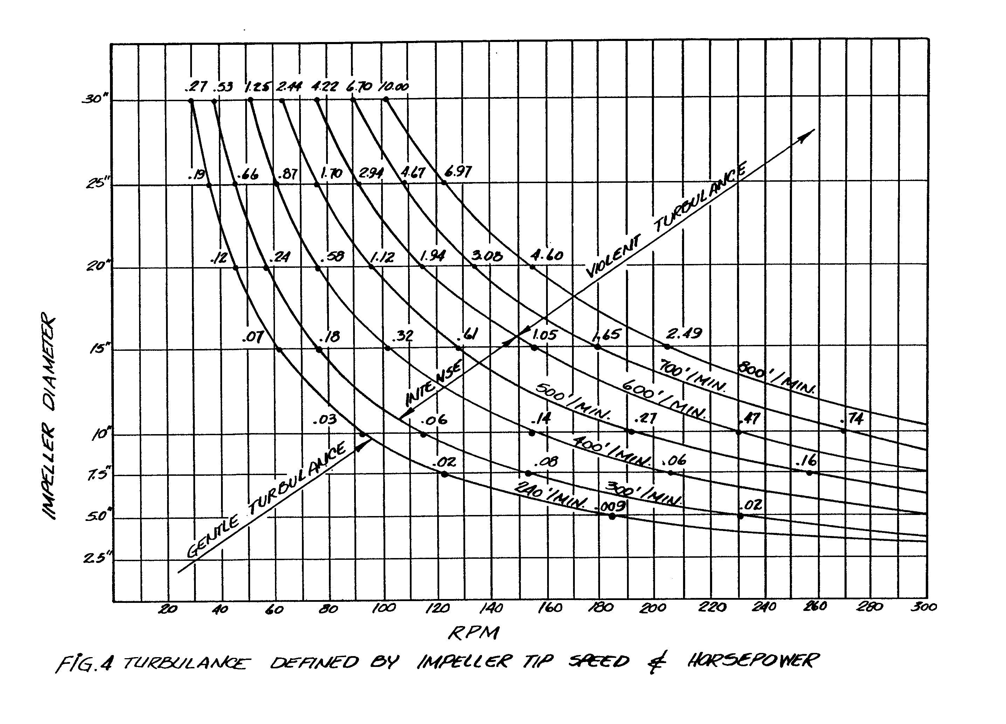

A graph in Fig. 4 depicts the various types of agitation produced by rotating vaious sizes of bladed means in the embodiment illustrated in Figs. 2 and 3. The graph is a plot of impeller diameter or impeller tip speed with the horsepower developed indicated by the numbers at the dots. The graph of Fig. 4 shows that a zone of turbulent flow exists when the blades have a tip speed of between about 300 and 600 feet per minute.

The size of the flocculator depends on the amount of material to be processed. In one embodiment of a flocculator illustrated in Figs. 2 and 3, a slurry 62 having a solids concentration of between about 35 and 45 per cent by weight and preferably a concentration of about 40 per cent by weight is introduced into the processing chamber 38 through inlet 60 at the rate of between about 100 and 240 gallons per minute and preferably a a rate of about 150 gallons per minute. A flocculating agent comprising a polymer mixture having a concentration of between 0.02 and 0.07 per cent by weight and preferably a concentration of about 0.03 per cent by weight is fed through the tubes 80 at a total rate of between about 25 and 35 gallons per minute and preferably at a rate of about 30 gallons per minute. A slurry 66 is extracted through the outlet at a rate of between about 125 and 275 gallons per minute and preferably at a rate of about 180 gallons per minute. The processing chamber 38 has an inside diameter of about 30 inches and the cylinder 36 has an inside diameter of about 12 inches. The impeller 50 has tip diameter of about 15 inches and the blades 54 are at an angle of about zero to the vertical. The baffles 56 extend outwardly from the cylinder 44 in a radial direction for a distance of about 6 inches and are 3 in number spaced 120 degrees apart. The baffles 58 extend inwardly from the side wall 42 in a radial direction for a distance of about 6 inches and are 3 in number spaced 120 degrees apart. The impeller 50 is rotated at a rate sufficient to produce a tip speed of between about 300 and 600 feet per minute and preferably a tip speed of about 500 feet per minute. Thus it is quite evident that there is a turbulent flow of the slurry and flocculating agent to produce the floccules. When the solids comprise a 28 mesh by zero refuse produced in a coal processing plant, the floccules are relatively small and appear to be bead-like in shape.

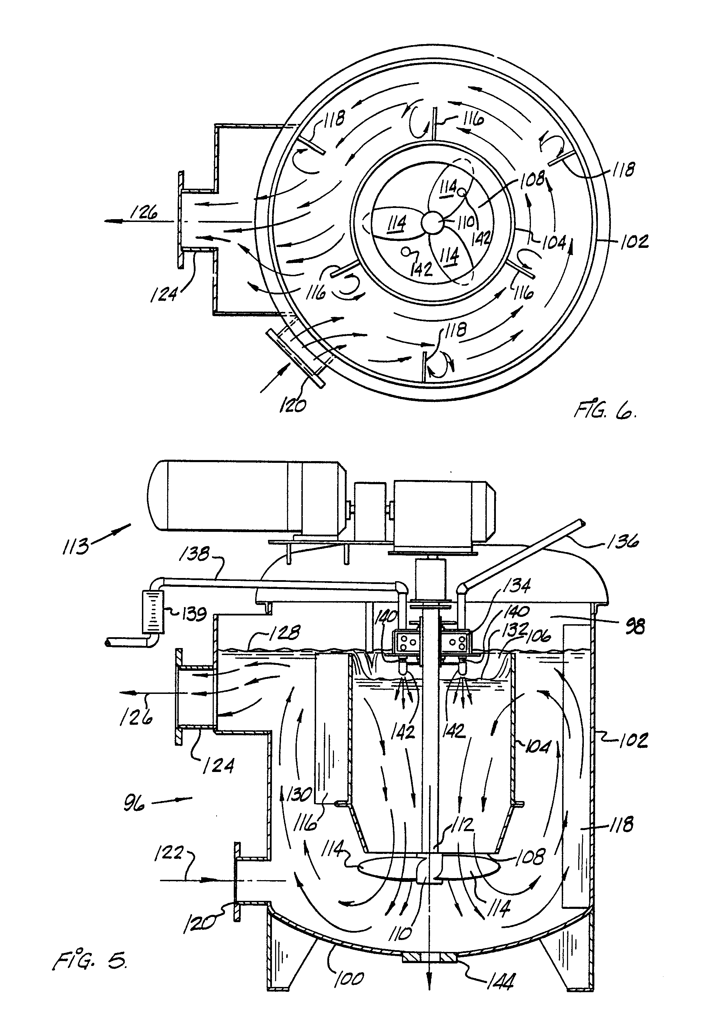

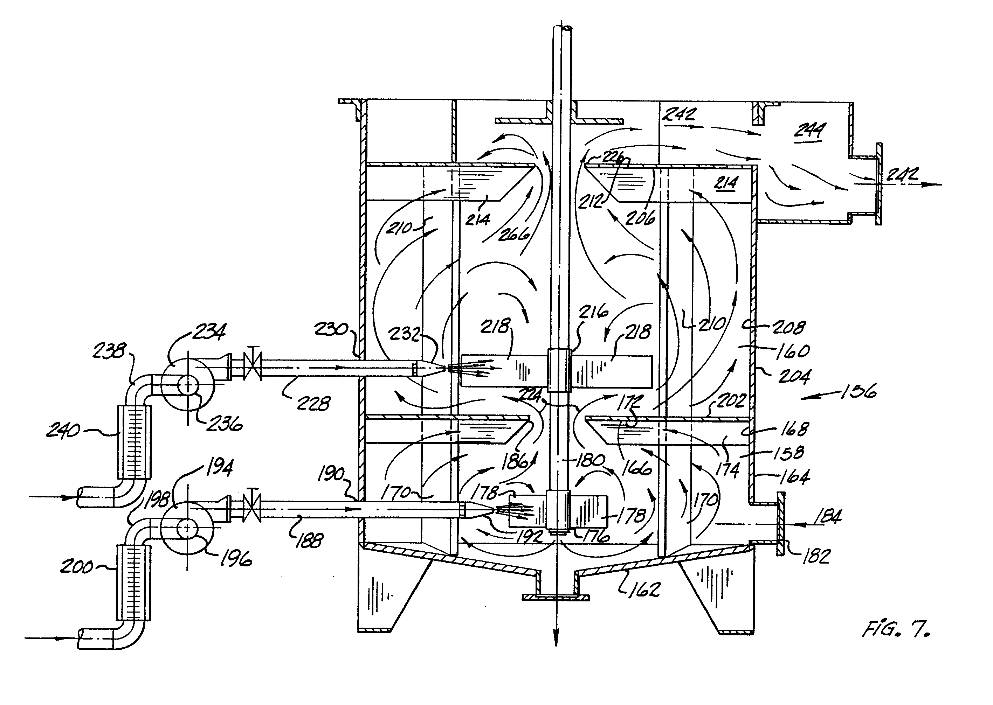

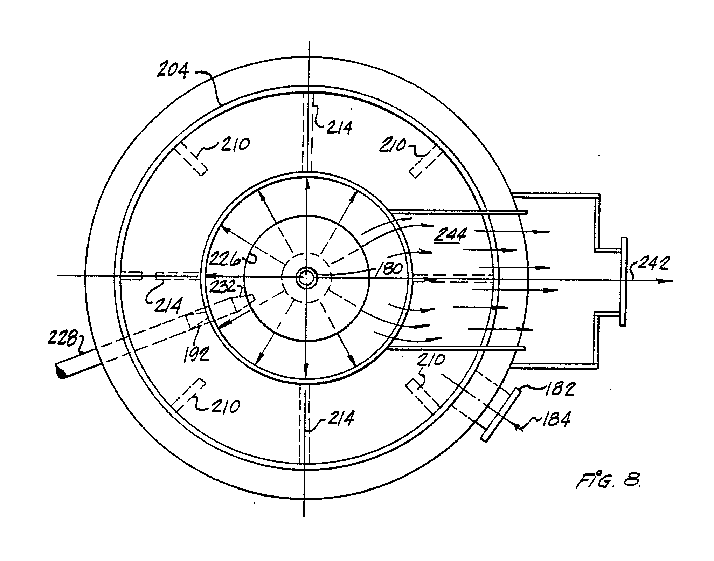

Another embodiment of this invention is illustrated in Figs. 5 and 6 and comprises a vessel 96 comprising a processing chamber comprising a processing chamber 98, having a bottom 100 and a side wall 102. A cylinder 104 having an open top end 106 and an open bottom end 108 is positioned in the processing chamber 98 so that the open bottom end 108 is spaced from the bottom 100 of the processing chamber 98. The inside diameter of the cylinder 104 is greater than one-half the inside diameter of the processing chamber 98. A bladed means 110, such as a propeller having shaped blades, is located adjacent to and below the open bottom end 108. The bladed means 110 is connected to a shaft 112 which can be rotated by suitable means 113. The blades 114 of the bladed means 110 are designed so as to move the material in the areas adjacent to the bladed means in a downward and circular direction. The rotation of the bladed means also induces the flow of the material within the cylinder 104 in such a manner that the level of the other material within the cylinder 104 is below the level of the other material in the processing chamber 98. The diameter of the tip of the blades 114 is slightly greater than the inside diameter of the cylinder 104. The outer surface of the cylinder 104 is provided with a plurality of baffles 116 and the inner surface of the side wall 102 is provided with baffles 118 to dampen the circular flow of materials in the processing chamber 98 and cause a spiral circulating flow pattern as discussed below.

An inlet 120 is located in a lower portion of the side wall 102 adjacent to the bottom 100 of the processing chamber 98. A slurry 122 containing the solids to be separated from the liquid is introduced into the processing chamber 98 through the inlet 120. An outlet 124 is located in the side wall 102 adjacent to the upper portion of the processing chamber 98. A slurry 126 comprising floccules in a liquid is extracted from the processing chamber 98 through the outlet 124. The rate of slurry 122 introduction and flocculating agent introduction relative to the rate of slurry 126 extraction function to maintain the level 128 of the material in the processing chamber 98. Because of the differences in characteristics of the slurry 122 as compared to the characteristics of the slurry 122, the volume 130 of material in the processing chamber 98 comprises many different types of slurries. It is noted that the level 132 of the volume 130 of material within the cylinder 104 is slightly below the level 128. As stated above, this is caused by the inducement of flow through the cylinder 104 by the rotation of the bladed means 110.

A blender 134 is located in the processing chamber 98 and spaced above the levels 129 and 132 in the processing chamber 98. A pipe 136 is used to feed a flocculating agent, such as an activated polymer mixture, having a concentration of about 0.5 per cent by weight into the blender 134. A pipe 138 is used to feed dilution water into the blender 134. A flow meter 139 is used to control the amount of dilution water added. Suitable means (not shown) are provided within the blender 134 so as to form a suitable intermixing of the flocculating agent and the dilution water so that the flocculating agent used in the process has a concentration of less than 0.5 per cent by weight. A plurality of tubes 140 extend from the blender 134 downwardly inside of the cylinder 104. The tubes 140 are provided with nozzles 142 adjacent to and above the level 132 of material in the cylinder 104. Although the nozzles 142 are preferably located as shown, it is within the scope of this invention to have the nozzles 142 located at any height within the cylinder 104 and even submerged in the material within the cylinder 104. The inlet 120 is located in relation to the outlet 124 so that the circulatory portion of the flow path of the material moving through the vessel is less than 360 degrees. In a preferred embodiment of the invention, this circulatory portion of the flow path is about 315 degrees. A drain 144 is located in the bottom 100 for use when needed.

The embodiment of the invention illustrated in Figs. 5 and 6 operates in a manner similar to the embodiment illustrated in Figs. 2 and 3 in that the material being processed in the vessel flows in a continuous spiral and circulatory path while being subjected to turbulent flow.

Another embodiment of the invention is illustrated in Figs. 7 and 8 and comprises a vessel 156 having a first processing chamber 158 and a second processing chamber 160. The first processing chamber 158 has a bottom 162, a side wall 164 and a top wall 166. The inner surface 168 of the side wall 164 is provided with baffles 170 and the bottom surface 172 of the top wall 166 is provided with baffles 174. A bladed means 176, such as an impeller having blades 178 which are at zero degrees to the vertical, is located in a central portion of the first processing chamber 158 and is spaced closer to the bottom 162 than to the top wall 166. The bladed means 176 is secured to the shaft 180 for rotation therewith. Conventional means (not shown) are used to rotate the shaft 180.

An inlet opening 182 is located in a lower portion of the side wall 164 of the processing chamber 158. A slurry 184 containing the solids to be separated from the liquid is introduced into the processing chamber 158 through the inlet opening 182. An outlet opening 186 is located in a central portion of the top wall 166. A pipe 188 extends through an opening 190 in the side wall 164 and terminates in a nozzle 192 which is adjacent to but spaced slightly from the path of rotation of the tip of the blades 178. A flocculating agent having a concentration of about 0.5 per cent by weight is fed into a blender 194 through a pipe 196. Dilution water is fed into the blender 194 through a pipe 198. A flow meter 200 controls the amount of dilution water. As will be described below, a slurry comprising solids in an initial stage of flocculation in a liquid flows from the first processing chamber 158 through the outlet opening 186 into the second processing chamber 160.

The second processing chamber 160 has a bottom comprising the upper surface 202 of the top wall 166, a side wall 204 and a top wall 206. The inner surface 208 of the side wall 204 is provided with baffles 210 and the bottom surface 212 of the top wall 206 is provided with baffles 214. A bladed means 216, such as an impeller having blades 218 which are at zero degrees to the vertical, is located in a central portion of the second processing chamber 160 and is spaced closer to the bottom 202 than to the top wall 206. The bladed means 216 is secured to an extension of the shaft 180 for rotation therewith.

A slurry 224 comprising the solids in an initial stage of flocculation in a liquid is introduced into the processing chamber 160 through the opening 186. An outlet opening 226 is located in a central portion of the top wall 206. A pipe 228 extends through an opening 230 in the side wall 204 and terminated in a nozzle 232 which is adjacent to but spaced slightly from the path of rotation of the tip of the blades 218. A flocculating agent having a concentration of about 0.5 per cent by weight is fed into a blender 234 through a pipe 236. Dilution water is fed into the blender 234 through a pipe 238. A flow meter 240 controls the amount of dilution water. As will be described below, a slurry 242 comprising floccules in a liquid flows out of the second processing chamber 160 through the outlet 226 into an overflow well 244 and then out of the vessel 156 through an outlet opening. The slurry is transported to a filtering means such as the refuse filter 28 wherein the floccules are separated from the liquid.

In this embodiment of the invention, the material being processed in each of the first and second processing chambers flows in a continuous spiral and circulatory path. However, as explained below, the amount of agitation is different in each of the processing chambers. When the process is in operation, a substantially constant volume of solids, flocculating agent and liquid is maintained in the first and second processing chambers. In fact, in the embodiment illustrated in Figs. 7 and 8, each of the processing chambers is substantially full.

In operation, the shaft 180 is rotated so that the bladed means 176 is also rotated. As the blades 178 move through the volume of material in the first processing chamber, they impart downward and circular forces on the material in the vicinity of their zone of rotation. These forces plus the flow retarding forces produced by the baffles 170 and 174 cause the volume of material in the first procesing chamber 158 to move in a continuous spiral and circulatory path. A flocculating agent, comprising a dilute mixture of an activated polymer having a concentration of less than 0.05 per cent by weight, is sprayed out of the nozzles 198 into the zone of the path of blades 178 and is mixed with the solids and liquid from the slurry 184 and flows therewith in the continuous spiral and circulatory path. During the movement in the continuous spiral circulatory path the flocculating agent causes the solids in the slurry to advance into an initial stage of flocculation. The shaft 180 is rotated at a rate sufficient to produce a tip speed of each blade of less than 240 feet per minute, which causes only gentle agitation in the material being processed. A slurry 224 comprising the solids in the initial stage of flocculation in a liquid flows out of the first processing chamber 158 and into the second processing chamber 160.

The rotation of the shaft 180 also rotates the bladed means 216. As the blades 218 move through the volume of material in the second processing chamber 158, they impart downward and circular forces on the material in the vicinity of their zone of rotation. Since the blades 218 have a diameter substantially greater than the diameter of the blades 178 and are rotated at the same rate, the tip speed of each blade 218 is substantially greater than the tip speed of each blade 178 so that the downward and circular forces are also substantially greater. The tip speed of each blade 218 is about 500 feet per minute which causes turbulent flow in the material being processed in the second processing chamber 160. A flocculating agent, comprising a dilute mixture of an activated polymer having a concentration of less than 0.05 per cent by weight, is sprayed out of the nozzles 232 into the zone of the path of the blades 218 and is mixed with the slurry comprising the solids in the initial stage of flocculation. The downward and circulatory forces produced by the blades 218 cooperate with the flow retarding forces produced by the baffles 210 and 214 to produce a continuous spiral and circulatory path for the material being processed in the second processing chamber 160. The mixed flocculating agent and the solids in the initial stage of flocculation flow in this spiral and circulatory path and during this movement the flocculating agent acts on the solids in the initial stage of flocculation to produce floccules. A slurry 242 comprising the floccules in a liquid flows out of the second processing chamber and into an overflow well 244 and then moves out of the vessel 156 through the outlet opening 242 to a conventional filter unit.

The flocculating agent used in the first processing chamber 158 is preferably cationic so as to cause the solids to change into an initial stage of flocculation. The flocculating agent used in the second processing chamber 160 is preferably anionic so as to produce the desired floccules.

One embodiment of this invention is illustrated in Figs. 2 and 3 and comprises a vessel 236 having a processing chamber 238 comprising having a bottom 240 and a side wall 242. A cylinder 244 having an open top end 246 and an open bottom end 248 is positioned in the processing chamber 238 so that the open bottom end 248 is spaced from the bottom 240 of the processing chamber 238. A bladed means 250, such as an impeller having vertical or slanted vanes or a propeller having shaped blades or other similar structure is located adjacent to and below the open bottom end 248. The bladed means 250 is connected to a shaft 252 which can be rotated by suitable means 253. The blades 254 of the bladed means 250 are designed so as to move the material in the areas adjacent to the impeller 250 in a downward and circular direction. The rotation of the bladed means also induces the flow of the material within the cylinder 244 in such a manner that the level of the material within the cylinder 244 is below the level of the other material in the processing chamber 238. The diameter of the tip of the blades 254 is slightly greater than the inside diameter of the cylinder 248. The outer surface of the cylinder 248 is provided with a plurality of baffles 256 and the inner surface of the side wall 242 is provided with baffles 258 to dampen the circular flow of materials in the processing chamber 238 and cause a spiral circulating flow pattern as discussed below.

An inlet 260 is located in a lower portion of the side wall 242 of the processing chamber 238. A slurry 262 containing the solids to be separated from the liquid is introduced into the processing chamber 238 through the inlet 260. An outlet 264 is located in an upper portion of the side wall 242 of the processing chamber 238. A slurry 266 comprising the flocced bead-like floccules in a liquid is extracted from the processing chamber 238 through the outlet 264. The rate of slurry 262 introduction and flocculating agent introduction relative to the rate of slurry 266 extraction function to maintain the level 268 of the material in the processing chamber 238. Because of the differences in characteristics of the slurry 262 as compared to the characteristics of the slurry 266, the volume 270 of material in the processing chamber 238 comprises many different types of slurries. It is noted that the level 272 of the volume 270 of slurries within the cylinder 244 is slightly below the level 268. As stated above, this is caused by the inducement of flow through the cylinder 244 by the rotation of the bladed means 110.

A blender 274 is located in the processing chamber 238 and spaced above the levels 268 and 272 in the processing chamber 238. A pipe 276 is used to feed a flocculating agent, such as an activated polymer mixture, having a concentration of about 0.5 per cent by weight into the blender 274. A pipe 278 is used to feed dilution water into the blender 274. A flow meter 239 is used to control the amount of dilution water added. Suitable means (not shown) are provided within the blender 274 so as to form a suitable intermixing of the flocculating agent and the dilution water so that the flocculating agent used in the process has a concentration of between 0.02 and 0.07 per cent by weight.

A dispersing means is illustrated specifically in Fig. 11 and comprises a disk 280 which is mounted on the shaft 252 for rotation therewith. A plurality of nozzles 282 are formed in the disk 280. The disk 280 receives the diluted flocculating agent from the blender 274 and distributes it outwardly through the nozzles 282. The disk is mounted on the shaft 252 so that when the disk is rotated, the diluted flocculating agent will flow through the nozzles 282 and be dispersed therefrom into the curtain of material flowing from the level 268 to the level 272. In this manner, the flocculating agent is widely dispersed in the slurry so as to readily contact the solids therein. The flocculating agent exits the nozzles 282 at a pressure of between about 10 and 20 pounds per square inch.

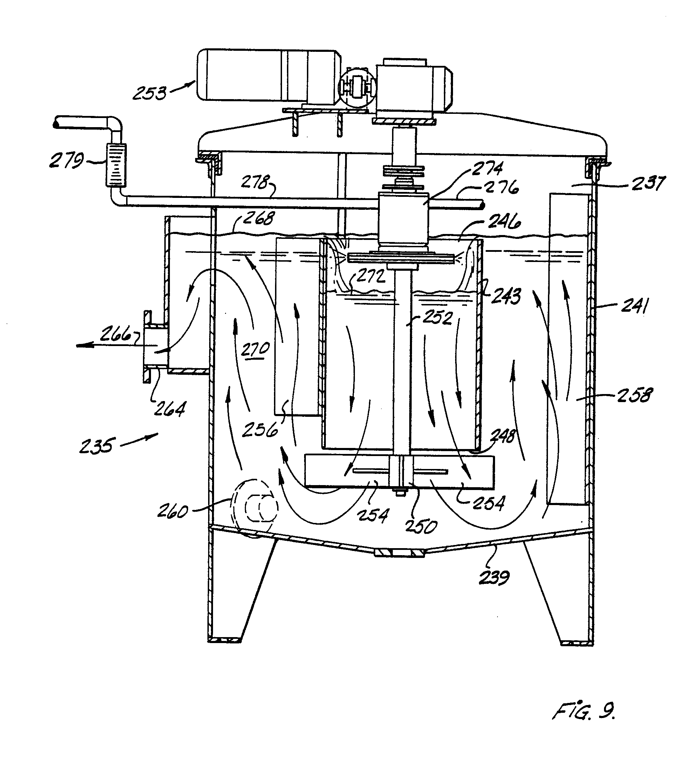

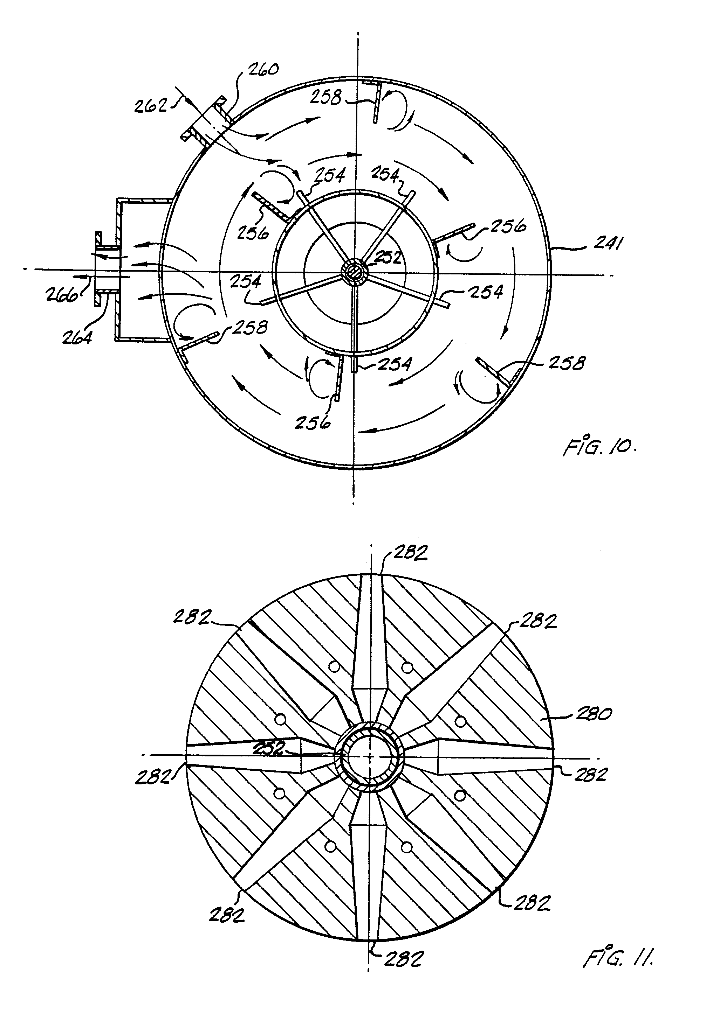

The embodiment of the invention illustrated in Figs. 9 -11 operated in a manner similar to the embodiments in Figs. 2, 3, 5 and 6 in that the material being processed in the vessel flows in a continuous spiral and circulatory path while being subjected to turbulent flow. It is noted that the flow of material in Figs. 9 -11 is illustrated as being clockwise while the flow of material in Figs. 2, 3, 5 and 6 is counterclockwise. The reason for this is the location of the inlet opening relative to the outlet opening. The circulatory portion of the continuous spiral and circulatory path is less than 360 degrees. In each of the embodiments illustrated in Figs. 2, 3, 5 and 6 and 9 -11, the circulatory portion of the continuous spiral and circulatory path is about 315 degrees.

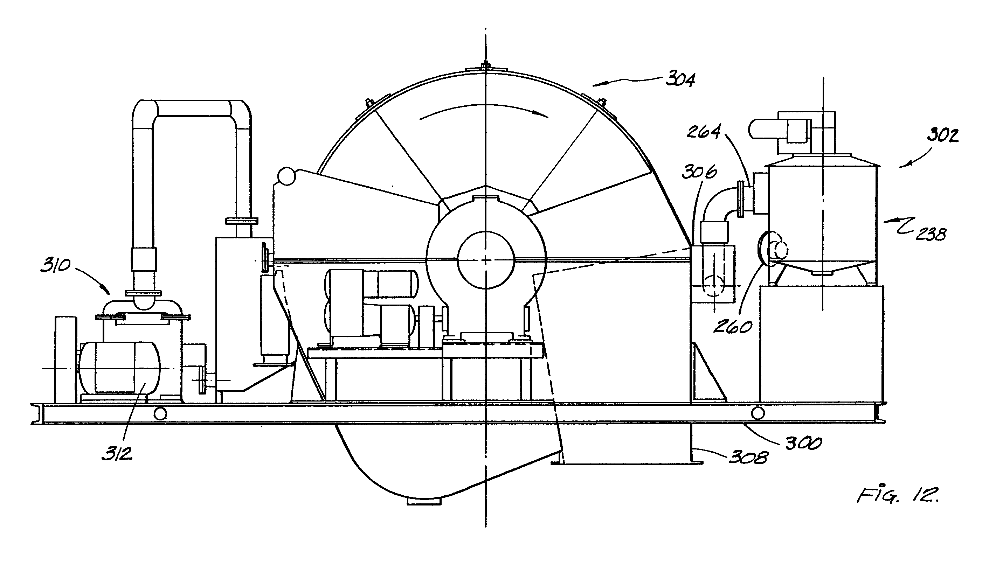

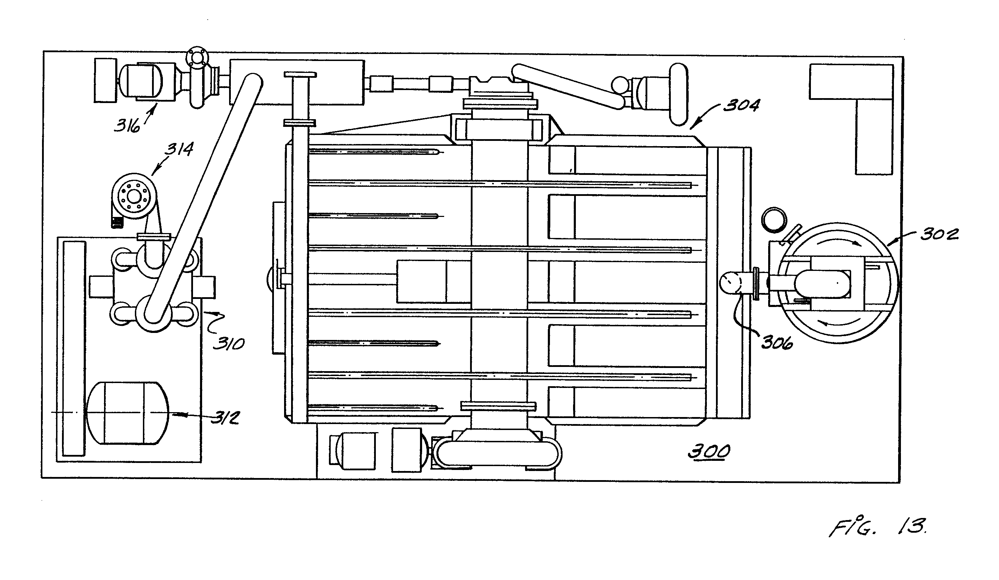

In Figs. 12 and 13, there is illustrated a complete assembly for processing a slurry comprising solids in a liquid into a filter cake comprising floccules formed in accordance with the inventive concepts in this application. A base 300 is provided for supporting all of the desired equipment. A flocculating unit 302 is similar to that illustrated in Figs. 9 -11. The slurry comprising solids in a liquid is introduced into the vessel 236 through the inlet opening 200 and the slurry comprising the floccules in a liquid exits through the outlet opening 264. A filtering unit 304, such as Peterson 8' -10" x 4 disk filter marketed by Peterson Filter Corporation, is mounted on the base 300. The slurry comprising the floccules in a liquid is introduced into the filter unit 304 through the means 306 and is processed in a conventional manner and a filter cake is discharged through the means 308. A wet ring vacuum pump 310 is also mounted on the base 300 and is used to supply the vacuum required for the operation of the filtering unit 304. Also mounted on the base 310 are a device motor 312, a discharge silencer 314, a filtrate pump 316 and other accessories. The base 300 is 20 feet long and 10 feet wide and the lifting weight is approximately 20,400 pounds so that the complete assembly may be readily transported.

It is contemplated that the inventive concepts herein described may be variously otherwise embodied and it is intended that the appended claims be construed to include alternative embodiments of the invention except insofar as limited by the prior art.

## Claims

1. A method for separating solids from a liquid in a slurry in a continuous operation wherein a slurry comprising solids in a liquid and a flocculating agent in a dilute mixture are continuously fed to at least one processing vessel and maintaining a substantially constant volume of solids and liquid in the vessel by continuously discharging a slurry of processed material substantially equal to the amount of slurry and flocculating agent continuously entering the vessel characterized by the steps of holding a substantially constant volume of solids and liquid in at least one processing chamber in said vessel, said processing chamber having a peripheral outer side wall portion extending 360 degrees about a central vertical axis and having an inlet opening in a lower portion thereof and an outlet opening in an upper portion thereof; continuously feeding a first slurry comprising solids in a liquid through said inlet opening of said processing chamber; continuously feeding a flocculating agent in a dilute mixture into said first slurry; creating forces in said processing chamber to move said first slurry and flocculating agent through the processing chamber from the inlet opening to the outlet opening in turbulent flow along a path of movement which includes a plurality of successive circumferentially spaced continuous spiral vertical loops; causing said flocculating agent to change said solids into floccules; discharging a slurry comprising said floccules in a liquid through the outlet opening after circumferential movement in the processing chamber of less than 360 degrees; and separating said floccules from said liquid in a separation unit.

2. A method according to claim 1, characterized by confining successive portions of said first slurry during said introduction of said flocculating agent by means having an open top end and an open bottom end.

3. A method according to claim 2, characterized in that said flocculating agent is anionic, or cationic or a combination of cationic and anionic, and in that said floccules are relatively small and generally bead-like in shape.

4. A method according to claim 2, characterized in that said spiral path is oval and in that said spiral and circulatory path are formed to have a portion within said confining means and a portion outside said confining means.

5. A method according to claim 2, characterized in that said forces are created by rotating a bladed means in a zone in said at least one processing chamber at a rate sufficient to produce a tip speed of said bladed means between 300 and 600 feet per minute, in that said rotating bladed means are located adjacent to but spaced from said bottom end of said confining means, in that at least a portion of each spiral path is located in said zone where said forces are created, and in that at least three spiral loops are formed in said continuous spiral path.

6. A method according to claim 1, characterized by comprising providing a pre-processing chamber; continuously feeding said first slurry into said pre-processing chamber; continuously feeding another flocculating agent in a dilute mixture into said first slurry while in said pre-processing chamber; mixing said another flocculating agent and said first slurry in said pre-processing chamber until said solids in said first slurry have reached a stage of initial flocculation; forming a second slurry comprising said solids in said stage of initial flocculation in a liquid; and continuously feeding said second slurry into said at least one processing chamber instead of said first slurry.

7. Apparatus for separating solids from a liquid in a slurry in a continuous operation wherein a slurry comprising solids in a liquid and a flocculating agent in a dilute mixture are continuously fed to at least one processing vessel and maintaining a substantially constant volume of solids and liquid in the vessel by continuously discharging a slurry of processed material substantially equal to the amount of slurry and flocculating agent continuously entering the vessel characterized by means for holding a substantially constant volume of solids and liquid in at least one processing chamber in said vessel, said processing chamber having a peripheral outer side wall portion extending 360 degrees about a central vertical axis and having an inlet opening in a lower portion thereof and an outlet opening in an upper portion thereof; means for continuously feeding a first slurry comprising solids in a liquid into said inlet opening of said processing chamber; means for continuously feeding a flocculating agent in a dilute mixture into said first slurry; means for creating forces in said processing chamber to move said first slurry and floccuting agent through the processing chamber from the inlet opening to the outlet opening in turbulent flow along a path of movement which includes a plurality of successive circumferentially spaced continuous spiral vertical loops; said flocculating agent causing said solids to change into floccules; means for discharging a slurry comprising said floccules in a liquid through the outlet opening after circumferential movement in the processing chamber of less than 360 degrees; and means for separating said floccules from said liquid.

8. Apparatus according to claim 7, further characterized by means for confining successive portions of said first slurry during said introduction of said flocculating agent, said means having an open top end and an open bottom end, and by means for forming said spiral and circulatory path to have a portion within said confining means and a portion outside said confining means.

9. Apparatus according to claim 8, characterized in that said flocculating agent is anionic, or cationic or is a combination of cationic and anionic, and in that said floccules are relatively small and generally bead-like in shape.

10. Apparatus according to claim 8, characterized by comprising means for mounting said vessel and said means for separating said floccules from said liquid on a common base.

FIG. 1

0 213 508

FIG. 3.

FIG. 2.

FIG. 4 TURBULANCE DEFINED BY IMPELLER TIP SPEED & HORSEPOWER

FIG. 6.

FIG. 5.

FIG. 7.

FIG. 8.

FIG. 9.

FIG. 10.

FIG. 11.

Fig. 12.

316
314
310
312
304
302
306
300

FIG. 13.

0 213 508